# EUROPÄISCHE PATENTSCHRIFT

(11) **EP 0 626 283 B1**
(45) Veröffentlichungstag und Bekanntmachung des Hinweises auf die Patenterteilung: **18.06.1997**
(21) Anmeldenummer: 94104572.6
(22) Anmeldetag: 23.03.1994
(51) Int. Cl.: B60J 1/17

(54) **Fahrzeugtüre, insbesondere Seitentüre eines Personenkraftwagens**
Vehicle door, particularly side door for passenger transport car
Porte de véhicule, en particulier porte latérale pour voiture automobile

(30) Priorität: 25.05.1993 DE 4317318
(43) Veröffentlichungstag der Anmeldung: 30.11.1994
(73) Patentinhaber: Dr.Ing.h.c. F. Porsche Aktiengesellschaft, 70435 Stuttgart (DE)
(72) Erfinder: Rieder, Klaus, D-71229 Leonberg (DE)

(56) Entgegenhaltungen:
- DE-A- 2 634 778
- DE-B- 2 027 241
- FR-A- 1 197 209
- FR-A- 1 263 183

## Beschreibung

Die Erfindung betrifft eine Fahrzeugtüre, insbesondere Seitentüre eines Personenkraftwagens, gemäß dem Oberbegriff des Patentanspruchs 1.

Aus der DE-OS 21 03 344 geht eine Fahrzeugtüre mit einer aufrecht verlaufenden Führungsschiene hervor, die einerseits mit einer höhenverstellbaren Türfensterscheibe und andererseits mit einem Dreiecksfenster zusammenwirkt. Ein unterer Endbereich dieser Führungsschiene ist mit einem Befestigungswinkel verbunden, der unmittelbar am Türkörper in Lage gehalten ist.

Dieser Anordnung haftet der Nachteil an, daß die Befestigung der Führungsschiene nur bei abgenommener Türinnenverkleidung vorgenommen werden kann.

Eine Einstellbarkeit der Führungsschiene relativ zum Türkörper ist bei dieser Anordnung nicht vorgesehen. Die auftretenden Toleranzen von Scheibe und Aufbau (Führungsschiene) sollen dadurch ausgeglichen werden, daß innerhalb der Führungsschiene zwei miteinander zusammenwirkende Einsätze vorgesehen sind, deren Herstellung und Montage kostenaufwendig ist.

Die DE-A-26 34 778 behandelt eine Fahrzeugtür mit einem Türkörper, in dem eine aufrecht verlaufende Führungsschiene angeordnet ist. Das untere Ende dieser Führungsschiene ist unter Zwischenschaltung eines Befestigungswinkels am Türkörper befestigt. Am oberen Ende der Führungsschiene greift eine Einstelleinrichtung an, mittels der die Führungsschiene in Querrichtung einstellbar und in der gewünschten Position festlegbar ist. Diese Einstelleinrichtung ist relativ schwer zugänglich.

Aus der FR-A-11 97 209 ist eine Fahrzeugtür mit einer sich abschnittsweise innerhalb eines Türkörpers erstreckenden Führungsschiene bekannt, wobei ein unteres Ende der Führungsschiene mit einer Einstelleinrichtung in Wirkverbindung steht. Die Einstelleinrichtung ermöglicht nur eine Verstellung der Führungsschiene in Fahrzeugquerrichtung und ist von der Fahrzeugaußenseite her durch eine Öffnung des Türaußenblechs zugänglich.

Aufgabe der Erfindung ist es, eine mit einem endseitigen Befestigungswinkel versehene Führungsschiene für eine Fahrzeugtür so weiterzubilden, daß bei einfachem Aufbau große Einbau- und Fertigungstoleranzen ausgeglichen werden können und daß eine einfache Befestigung der Führungsschiene am Türkörper auch bei montierter Türinnenverkleidung möglich ist. Ferner soll eine Verdrehbewegung der Führungsschiene beim Anziehen der Befestigungsschraube vermieden werden.

Erfindungsgemäß wird diese Aufgabe durch die kennzeichnenden Merkmale des Anspruchs 1 gelöst. Weitere, die Erfindung in vorteilhafter Weise ausgestaltende Merkmale enthalten die Unteransprüche. Die mit der Erfindung hauptsächlich erzielten Vorteile sind darin zu sehen, daß durch die Anordnung einer mit dem Befestigungswinkel zusammenwirkenden, am Türkörper in Lage gehaltenen Einstellvorrichtung große Toleranzen ausgeglichen werden können. Durch eine am äußeren Umfang des Türkörpers angeordnete Öffnung ist eine Befestigungsschraube zum Festlegen der Führungsschiene einführbar und eindrehbar, so daß die Befestigung der Führungsschiene auch bei vollständig montierter Türinnenverkleidung erfolgen kann. Nach erfolgter Justierung wird diese Öffnung durch einen entfernbaren Stopfen verschlossen. Die Öffnung ist vorzugsweise an der abschnittsweise horizontal ausgebildeten Unterseite des Türkörpers vorgesehen. Die aus einem feststehenden Haltebock, einer Sicherungsplatte und Ausnehmungen am Haltebock und der Sicherungsplatte gebildete Einstellvorrichtung weist einen einfachen, kostengünstigen Aufbau auf.
Durch die an der Sicherungsplatte angeordneten Führungsstege wird eine definierte Verschiebebewegung von Sicherungsplatte, Befestigungswinkel und Führungsschiene in Längsrichtung der Tür gewährleistet.
Die an der Sicherungsplatte ausgebildeten, nach oben abgestellten Flansche umgreifen den Fußabschnitt des Befestigungswinkels formschlüssig und bewirken, daß sich beim Anziehen der Befestigungsschraube die Führungsschiene nicht gegenüber der Fensterscheibe verdrehen kann. Durch die Einstellvorrichtung wird sichergestellt, daß die Vorspannung des Türrahmens relativ zur Dichtungsfläche am Türrohbau eingestellt werden kann.

Ein Ausführungsbeispiel der Erfindung ist in der Zeichnung dargestellt und wird im folgenden näher erläutert.

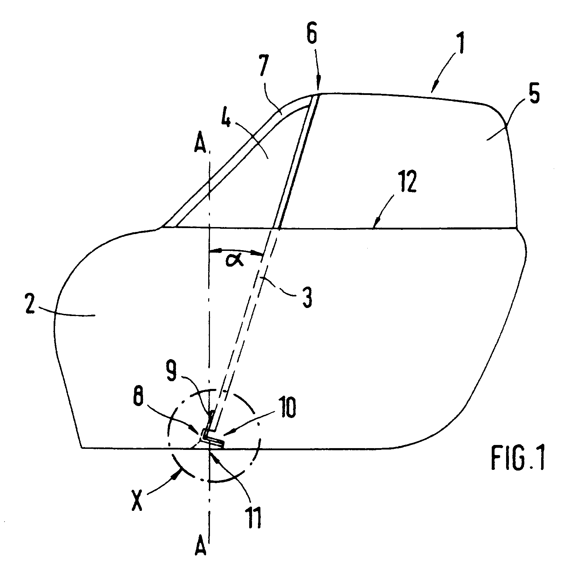

Es zeigt:
- Fig. 1: eine Seitenansicht auf eine Fahrzeugtür
- Fig. 2: eine Einzelheit X der Fig. 1 in größerem Maßstab mit der erfindungsgemäßen Einstelleinrichtung
- Fig. 3: eine Explosionszeichnung der Einzelteile der Einstelleinrichtung in größerem Maßstab
- Fig. 4: einen Schnitt nach der Linie IV - IV der Fig. 2 in größerem Maßstab
- Fig. 5: eine Ansicht in Pfeilrichtung R der Fig. 2 in größerem Maßstab
- Fig. 6: einen Schnitt nach der Linie VI - VI der Fig. 5
Eine Fahrzeugtür 1, insbesondere eine Seitentüre für einen Personenkraftwagen, umfaßt gemäß Fig. 1 einen Türkörper 2 mit einer Führungsschiene 3, wobei die Führungsschiene 3 nicht näher dargestellte Aufnahmeabschnitte für ein Dreiecksfenster 4 und eine höhenverstellbare Türfensterscheibe 5 aufweist.

Im Ausführungsbeispiel ist die aufrechte, schrägverlaufende Führungsschiene 3 an ihrem einen Ende 6 mit einem Rahmenabschnitt 7 des Dreiecksfensters 4 verbunden, wogegen das andere Ende 8 unter Zwischenschaltung eines Befestigungswinkels 9 und einer Einstelleinrichtung 10 an einem unteren Randbereich 11 des Türkörpers 2 befestigt ist.
Die Führungsschiene 3 ist gegenüber einer querverlaufenden Vertikalebene A-A unter einem Winkel α und gegenüber einer längsverlaufenden Vertikalebene B-B um einen Winkel β geneigt. Gemäß Fig. 1 erstreckt sich die Führungsschiene 3 abschnittsweise verdeckt innerhalb des Türkörpers 2, wogegen sie oberhalb einer Gürtellinie 12 freiliegend verläuft. Es besteht auch die Möglichkeit, daß sich die Führungsschiene 3 lediglich bis zur Höhe der Gürtellinie 12 nach oben hin erstreckt.

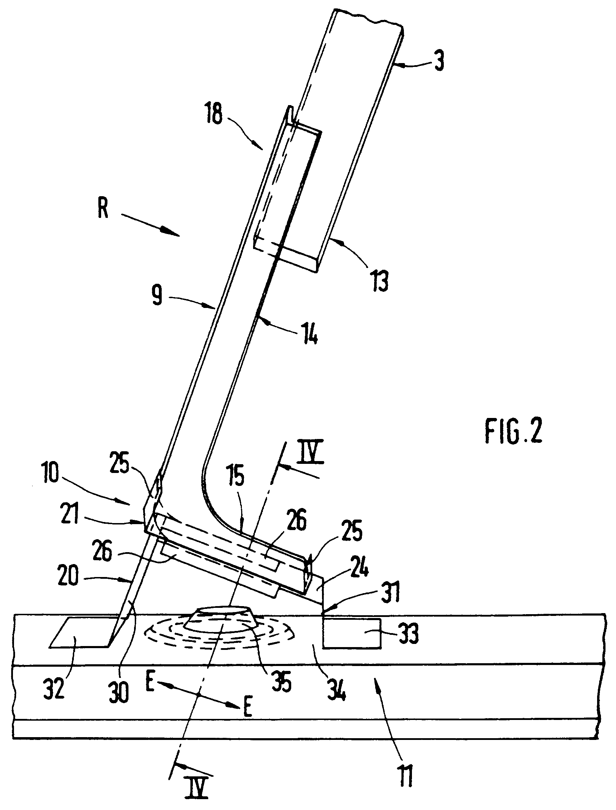

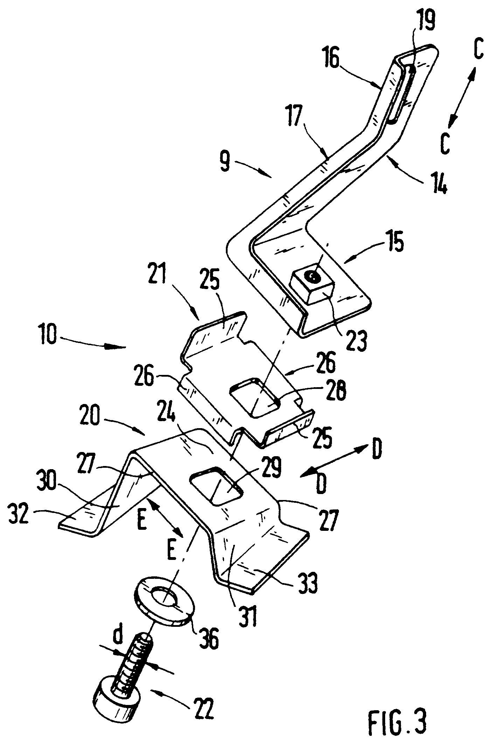

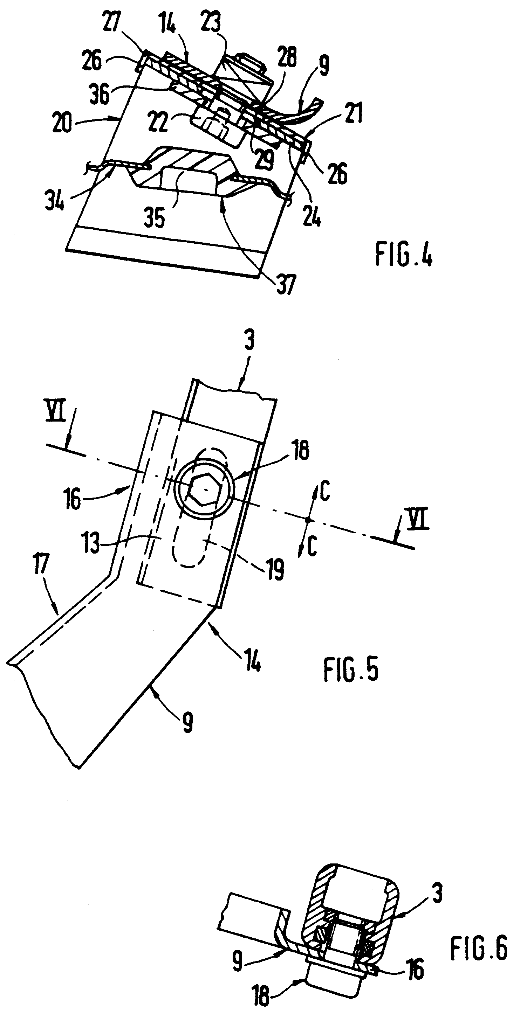

An einen unteren Endbereich 13 der Führungsschiene 3 ist der Befestigungswinkel 9 angeschlossen (Fig. 2 und 3). Dieser ist in der Seitenansicht gesehen etwa L-förmig profiliert und setzt sich aus einem etwa in Verlängerung der Führungsschiene 3 verlaufenden langgestreckten aufrechten Abschnitt 14 und einem zweiten, senkrecht dazu ausgerichteten kürzeren Fußabschnitt 15 zusammen (Fig. 2).
Der aufrechte Abschnitt 14 besteht - in Querrichtung gesehen - aus zwei winkelig aneinandergesetzten Bereichen 16, 17, wobei der obenliegende Bereich 16 abschnittsweise an der Außenseite der Führungsschiene 3 anliegt und über eine Schraubverbindung 18 mit dieser verbunden ist (Fig. 5 und 6).
Eine im Bereich 15 angeordnete längliche Schlitzöffnung 19 bewirkt, daß eine Einstellbarkeit zwischen Führungsschiene 3 und Befestigungswinkel 9 in Richtung C-C gegeben ist (Höhenrichtung).
Die Abschnitte 14, 15 des Befestigungswinkels 9 sind im Querschnitt gesehen jeweils L-förmig profiliert.

Die Einstellvorrichtung 10 besteht im wesentlichen aus einem am Türkörper 2 in Lage gehaltenen, feststehenden Haltebock 20 und einer zwischen Haltebock 20 und Befestigungswinkel 9 vorgesehenen Sicherungsplatte 21 sowie einer Befestigungsschraube 22, die in eine am Befestigungswinkel 9 vorgesehene Mutter 23 eingedreht ist (Fig. 3). Die Mutter 23 wird im Ausführungsbeispiel durch eine Schweißmutter gebildet, die am Fußabschnitt 15 des Befestigungswinkels 9 angeordnet ist.
Die Sicherungsplatte 21 nimmt den Fußabschnitt 15 des darüberliegenden Befestigungswinkels 9 verdrehsicher auf und ist auf einer Auflagefläche 24 des darunterliegenden Haltebockes 20 verschiebbar geführt (Richtung E-E).
An der Sicherungsplatte 21 sind zwei parallel mit Abstand zueinander verlaufende, nach oben abgestellte, querverlaufende Flansche 25 ausgebildet, die den Fußabschnitt 14 des Befestigungswinkels 9 an zwei gegenüberliegenden Seiten formschlüssig umgreifen. Dadurch kann der Befestigungswinkel 9 lediglich in Querrichtung D-D gegenüber der Sicherungsplatte 21 verschoben werden, wogegen die Flansche 25 einen Verdrehschutz für den Befestigungswinkel 9 bzw. die Führungsschiene 3 bilden, wenn die Befestigungsschraube 22 angezogen wird. Ferner sind an der Sicherungsplatte 21 zwei parallel mit Abstand zueinander angeordnete, sich in Längsrichtung erstreckende, nach unten gerichtete Führungsstege 26 vorgesehen, die mit seitlichen Randabschnitten 27 der Anlagefläche 24 des Haltebockes 20 zusammenwirken und die Sicherungsplatte 21 in Querrichtung des Türkörpers 2 fixieren.
Die beiden Führungsstege 26 ermöglichen eine definierte Verschiebebewegung der Sicherungsplatte 21 und des Befestigungswinkels 9 in Richtung E-E relativ zum feststehenden Haltebock 20.
Um eine Einstellbarkeit der Führungsschiene 3 in Längsrichtung (E-E) und in Querrichtung (D-D) zu erzielen, sind an der Sicherungsplatte 21 und am Haltebock 20 Ausnehmungen 28, 29 vorgesehen, die in Längsrichtung (E-E) und Querrichtung (D-D) jeweils eine wesentlich größere Längserstreckung aufweisen als der Außendurchmesser d der Befestigungsschraube 22.
Gemäß Fig. 3 sind die Ausnehmungen 28, 29 als Vierkantlöcher ausgebildet; sie können jedoch auch eine andere Form (kreisförmig, rechteckförmig, quadratisch oder dergl.) aufweisen.

Der Haltebock 20 umfaßt zwei aufrecht verlaufende, durch die Anlagefläche 24 miteinander verbundene Wandabschnitte 30, 31, wobei an den freien Enden der Wandabschnitte 30, 31 Flansche 32, 33 abgestellt sind, die an der Innenseite des Türkörpers 2 aufliegen und mit diesem fest verbunden sind.
Im Ausführungsbeispiel sind die Flansche 32, 33 etwa horizontal ausgebildet und mit einem unteren Randbereich 11 des Türkörpers 2 verschweißt oder verklebt.
Die Anlagefläche 24 verläuft etwa senkrecht zur Längserstreckung der Führungsschiene 3 und ist ebenfalls in zwei Ebenen geneigt. Ferner verläuft die Anlagefläche 24 mit Abstand zum unteren Randbereich 11 des Türkörpers 2.
Eine einfache und schnelle Einstellung bzw. Befestigung der Führungsschiene 3 wird dadurch erzielt, daß an einer äußeren Begrenzungsfläche 34 des Türkörpers 2 eine Öffnung 35 ausgebildet ist, durch die die Befestigungsschraube 22 montierbar ist. Somit braucht bei einer nachträglichen Justierung die Innenverkleidung nicht entfernt werden (Fig. 4).
Gemäß Fig. 4 wird die Befestigungsschraube 22 von unten her durch die Öffnung 35 eingeführt und in die Schweißmutter 23 eingedreht. Zwischen der Unterseite der Anlagefläche 24 und dem Kopfabschnitt der Befestigungsschraube 22 ist gemäß Fig. 4 eine Unterlagscheibe 36 angeordnet.
Die am Türkörper 2 vorgesehene Öffnung 35 zum Einführen der Befestigungsschraube 22 erstreckt sich im Bereich des Haltebockes 20 und zwar im Bereich zwischen den beiden beabstandeten, aufrechten Wandabschnitten 30, 31 unterhalb der Anlagefläche 24.
In die am Türkörper 2 angeordnete Öffnung 35 wird nach erfolgter Einstellung bzw. Befestigung der Führungsschiene 3 ein Verschlußstopfen 37 eingesetzt, der bei Bedarf jederzeit wieder entfernbar ist (Fig. 4).

## Patentansprüche

1. Fahrzeugtüre, insbesondere Seitentüre eines Personenkraftwagens, mit einem Türkörper (2), in dem zumindest eine aufrechte Führungsschiene (3) angeordnet ist, deren unteres Ende mit einer Einstelleinrichtung (10) zusammenwirkt, die durch eine an einer äußeren Begrenzungsfläche (34) des Türkörpers (2) angeordnete Öffnung (35) betätigbar ist, wobei die Einstelleinrichtung eine mit einer Mutter (23) zusammenwirkende Befestigungsschraube (22) umfaßt, **dadurch gekennzeichnet**, daß sich die Einstelleinrichtung (10) im wesentlichen aus einem am unteren Randbereich (11) des Türkörper (2) befestigten Haltebock (20) und einer mit diesem zusammenwirkenden Sicherungsplatte (21) zusammensetzt, die einerseits auf einer darunterliegenden, etwa rechtwinkelig zur Führungsschiene (3) ausgerichteten Anlagefläche (24) des Haltebocks (20) in Längsrichtung (E-E) verschiebbar geführt ist und andererseits einen Fußabschnitt (15) eines mit der Führungsschiene (3) verbundenen Befestigungswinkels (9) verdrehsicher aufnimmt, wobei der Fußabschnitt (15) in Querrichtung (D-D) gegenüber der Sicherungsplatte (21) verlagerbar ist und daß die Befestigungsschraube (22) zum Festlegen der Führungsschiene (3) in der gewünschten Position von unten her durch die an der Unterseite (34) des Türkörpers (2) vorgesehene Öffnung (35) und Ausnehmungen (28, 29) des Haltebocks (20) und der Sicherungsplatte (21) hindurchgeführt und in die am Fußabschnitt (15) vorgesehene Mutter (23) eingedreht ist.

2. Fahrzeugtüre nach Anspruch 1, **dadurch gekennzeichnet**, daß an der Sicherungsplatte (21) zwei mit Abstand zueinander angeordnete, sich in Längsrichtung erstreckende, nach unten gerichtete Führungsstege (26) vorgesehen sind, die mit seitlichen Randabschnitten (27) der Anlagefläche (24) des Haltebockes (20) zusammenwirken und die Sicherungsplatte (21) in Querrichtung (D-D) des Türkörpers (2) fixieren.

3. Fahrzeugtüre nach Anspruch 1, **dadurch gekennzeichnet**, daß an der Sicherungsplatte (21) zwei mit Abstand zueinander angeordnete, in Querrichtung verlaufende, nach oben abgestellte Flansche (25) ausgebildet sind, die einen Fußabschnitt (15) des Befestigungswinkels (9) formschlüssig umgreifen, dergestalt, daß der Befestigungswinkel (9) lediglich in Querrichtung (D-D) des Türkörpers (2) verschiebbar ist, wobei die abgestellten Flansche (25) einen Verdrehschutz für die Führungsschiene (3) bilden.

4. Fahrzeugtüre nach Anspruch 1, **dadurch gekennzeichnet**, daß am Fußabschnitt (15) des Befestigungswinkels (9) eine Mutter (23) vorgesehen ist, in die von unten her die Befestigungsschraube (22) eindrehbar ist, wobei Ausnehmungen (28, 29) am Haltebock (20) und der Sicherungsplatte (21) wesentlich größer ausgebildet sind als der Außendurchmesser d der Befestigungsschraube (22).

5. Fahrzeugtüre nach Anspruch 1, **dadurch gekennzeichnet**, daß der Haltebock (20) zwei aufrecht verlaufende, durch die Anlagefläche (24) miteinander verbundene Wandabschnitte (30, 31) umfaßt, wobei endseitig abgestellte Flansche (32, 33) der Wandabschnitte (30, 31) an einem unteren, etwa horizontalen Randbereich (11) des Türkörpers (2) aufliegen und fest mit diesem verbunden sind.

6. Fahrzeugtüre nach Anspruch 1, **dadurch gekennzeichnet**, daß die Anlagefläche (24) etwa senkrecht zur Längserstreckung der Führungsschiene (3) ausgerichtet ist und mit Abstand zum unteren Randbereich (11) des Türkörpers (2) verläuft.

7. Fahrzeugtüre nach den Ansprüchen 1, 5 und 6, **dadurch gekennzeichnet**, daß sich die im Türkörper (2) vorgesehene Öffnung (35) zum Einführen der Befestigungsschraube (22) im Bereich des Haltebockes (20) erstreckt und zwar im Raum zwischen den beiden beabstandeten, aufrechten Wandabschnitten (30, 31) unterhalb der Anlagefläche (24).

8. Fahrzeugtüre nach den Ansprüchen 1 und 7, **dadurch gekennzeichnet**, daß in die am Türkörper (2) angeordnete Öffnung (35) ein abnehmbarer Verschlußstopfen (37) einsetzbar ist.

## Claims

1. A vehicle door, in particular a side door of a passenger car, with a door body (2) in which at least one upright guide rail (3) is arranged, the lower end of which cooperates with an adjusting device (10) actuable through an opening (35) provided in an outer boundary face (34) of the door body (2), wherein the adjusting device comprises a fastening bolt (22) cooperating with a nut (23), **characterized in that** the adjusting device (10) is essentially formed by a holding bracket (20) secured to the lower edge area (11) of the door body (2) and a fastening plate (21) which cooperates therewith and which on the one hand is guided displaceably in the longitudinal direction (**E-E**) on an underlying abutment face (24) of the holding bracket (20) orientated at a right angle to the guide rail (3) and on the other hand receives - in a non-rotatable manner - a foot portion (15) of a fastening angled portion (9) connected to the guide rail (3), wherein the foot portion (15) is displaceable in the transverse direction (**D-D**) relative to the fastening plate (21), and the fastening bolt (22) is guided through the opening (35) provided in the underside (34) of the door body (2) and recesses (28, 29) in the holding bracket (20) and the fastening plate (21) in order to fasten the guide rail (3) in the desired position from below and is screwed into the nut (23) provided on the foot portion (15).

2. A vehicle door according to Claim 1, **characterized in that** two spaced guiding webs (26), extending in the longitudinal direction and directed downwards, are provided on the fastening plate (21), the said guiding webs (26) cooperating with lateral edge portions (27) of the abutment face (24) of the holding bracket (20) and fixing the fastening plate (21) in the transverse direction (**D-D**) of the door body (2).

3. A vehicle door according to Claim 1, **characterized in that** two spaced flanges (25), extending in the transverse direction and projecting upwards, are provided on the fastening plate (21), the said flanges (25) embracing a foot portion (15) of the fastening angled portion (9) with positive locking in such a way that the fastening angled portion (9) is displaceable only in the transverse direction (**D-D**) of the door body (2), wherein the projecting flanges (25) form a safeguard to prevent the guide rail (3) from rotating.

4. A vehicle door according to Claim 1, **characterized in that** a nut (23), into which the fastening bolt (22) can be screwed from below, is provided on the foot portion (15) of the fastening angled portion (9), wherein recesses (28, 29) in the holding bracket (20) and the fastening plate (21) are considerably larger than the external diameter **d** of the fastening bolt (22).

5. A vehicle door according to Claim 1, **characterized in that** the holding bracket (20) comprises two wall portions (30, 31) extending upwards and connected to each other by the abutment face (24), wherein flanges (32, 33) projecting at the end of the wall portions (30, 31) rest against a lower, substantially horizontal rim area (11) of the door body (2) and are securely connected thereto.

6. A vehicle door according to Claim 1, **characterized in that** the abutment face (24) is orientated substantially at a right angle to the longitudinal extension of the guide rail (3) and extends at a distance from the lower horizontal rim area (11) of the door body (2).

7. A vehicle door according to Claims 1, 5 and 6, **characterized in that** the opening (35) provided in the door body (2) for inserting the fastening bolt (22) extends in the region of the holding bracket (20), namely in the space between the two spaced upright wall portions (30, 31) below the abutment face (24).

8. A vehicle door according to Claims 1 and 7, **characterized in that** a removable closure stopper (37) is insertible into the opening (35) provided in the door body (2).

## Revendications

1. Porte de véhicule, en particulier porte latérale d'une voiture de tourisme, comportant un corps de porte (2) dans lequel est placé au moins un rail de guidage (3), dont l'extrémité inférieure coopère avec un dispositif de réglage (10), qui est actionnable à travers une ouverture (35), située sur une surface de délimitation (34) extérieure du corps de porte (2), le dispositif de réglage comprenant une vis de fixation (22), coopérant avec un écrou (23), caractérisée en ce que le dispositif de réglage (10) se compose essentiellement d'un support de maintien (20), fixé sur la zone de bordure inférieure (11) du corps de porte (2), et d'une plaque de sûreté (21) coopérant avec ce bloc, laquelle plaque est d'une part guidée coulissante dans la direction longitudinale (E-E), sur une surface d'application (24) du support de maintien (20), située audessus, dirigée à peu près perpendiculairement au rail de guidage (3), et d'autre part, loge, en l'empêchant de tourner, une portion de pied (15) d'une équerre de fixation (9), reliée au rail de guidage (3), la portion de pied (15) étant déplaçable dans la direction transversale (D-D) par rapport à la plaque de sûreté (21) et en ce que la vis de fixation (22), en vue de la fixation du rail de guidage (3) dans la position voulue, traverse, à partir du bas, l'ouverture (35), prévue sur la face inférieure (34) du corps de porte (2), ainsi que des évidements (28, 29) du support de maintien (20) et de la plaque de sûreté (21) et est vissée dans l'écrou (23) prévu sur la portion de pied (15).

2. Porte de véhicule selon la revendication 1, caractérisée en ce que sur la plaque de sûreté (21) sont prévues des nervures de guidage (26), espacées l'une de l'autre, s' étendant dans la direction longitudinale, dirigées vers le bas, qui coopèrent avec des portions de bordure (27) latérales de la surface d'application (24) du support de maintien (20) et fixent la plaque de sûreté (21) dans la direction transversale (D-D) du corps de porte (2).

3. Porte de véhicule selon la revendication 1, caractérisée en ce que sur la plaque de sûreté (21) sont formées deux brides (25) espacées l'une de l'autre, s'étendant dans la direction transversale, dirigées vers le haut, qui entourent par concordance de forme une portion de pied (15) de l'équerre de fixation (9), de manière que l'équerre de fixation (9) puisse coulisser uniquement dans la direction transversale (D-D) du corps de porte (2), les brides (25) formant une protection contre la rotation pour le rail de guidage (3).

4. Porte de véhicule selon la revendication 1, caractérisée en ce que sur la portion de pied (15) de l'équerre de fixation (9) est prévu un écrou (23), dans lequel peut être vissée à partir du bas la vis de fixation (22), des évidements (28, 29) étant formés sur le support de maintien (20) et la plaque de sûreté (21), nettement plus grands que le diamètre extérieur (d) de la vis de fixation (22).

5. Porte de véhicule selon la revendication 1, caractérisée en ce que le support de maintien (20) comprend deux portions de paroi (30, 31) dirigées verticalement, reliées entre elles par la surface d'application (24), des brides (32, 33) déviées à une extrémité des portions de paroi (30, 31), reposant sur une zone de bordure (11) inférieure, à peu près horizontale du corps de porte (2) et étant solidaires de celui-ci.

6. Porte de véhicule selon la revendication 1, caractérisée en ce que la surface d'application (24) est orientée à peu près perpendiculairement à l'extension longitudinale du rail de guidage (3) et s'étend à distance de la zone de bordure (11) inférieure du corps de porte (2).

7. Porte de véhicule selon les revendications 1, 5 et 6, caractérisée en ce que l'ouverture (35), prévue dans le corps de porte (2), pour l'introduction de la vis de fixation (22), s'étend dans la zone du support de maintien (20) et ce dans l'espace compris entre les deux portions de paroi (30, 31) verticales, espacées, au-dessous de la surface d'application (24).

8. Porte de véhicule selon les revendications 1 et 7, caractérisée en ce que dans l'ouverture (35), placée sur le corps de porte (2), peut être introduit un bouchon de fermeture (37) amovible.
